(19) **Europäisches Patentamt / European Patent Office / Office européen des brevets**

(11) **EP 4 589 357 A1**

(12) **EUROPEAN PATENT APPLICATION**
published in accordance with Art. 153(4) EPC

(43) Date of publication:
**23.07.2025 Bulletin 2025/30**

(21) Application number: **23865586.4**

(22) Date of filing: **14.09.2023**

(51) International Patent Classification (IPC):
*G02B 21/06* (2006.01)   *B23K 26/082* (2014.01)
*G02B 26/10* (2006.01)   *G02F 1/365* (2006.01)
*H01S 3/067* (2006.01)   *H01S 3/10* (2006.01)

(52) Cooperative Patent Classification (CPC):
**B23K 26/082; G02B 21/06; G02B 26/10;
G02F 1/365; H01S 3/067; H01S 3/10**

(86) International application number:
**PCT/JP2023/033478**

(87) International publication number:
**WO 2024/058237 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.09.2022 JP 2022147880**

(71) Applicant: **NIKON CORPORATION
Minato-ku
Tokyo 108-6290 (JP)**

(72) Inventor: **TOKUHISA, Akira
Tokyo 108-6290 (JP)**

(74) Representative: **Hoffmann Eitle
Patent- und Rechtsanwälte PartmbB
Arabellastraße 30
81925 München (DE)**

(54) **OPTICAL DEVICE, OPTICAL MACHINING DEVICE, MICROSCOPE DEVICE, AND SCANNING METHOD**

(57) An optical device (10) of an optical machining device (1) includes: an optical fiber amplifier that amplifies pulsed light; a diffraction grating (12) that disperses the pulsed light (PL) output from the optical fiber amplifier, through the diffraction phenomenon; a collimating lens (13) that collimates the pulsed light (PL) dispersed by the diffraction grating (12); and an objective lens (17) that focuses the pulsed light (PL) having passed through the collimating lens (13), and changes a position at which temporal focus occurs, in the optical axis direction of the objective lens (17), by changing the amplification factor of the optical fiber amplifier.

*FIG.1*

## Description

TECHNICAL FIELD

The present invention relates to an optical device, an optical machining device, a microscope device, and a scanning method.

TECHNICAL BACKGROUND

Optical machining devices and microscope devices include those comprising optical devices that output pulsed light. A technique called temporal focus to improve the resolution of a microscope device that comprises an optical device that outputs pulsed light has been known (for example, see Non patent literature 1).

PRIOR ARTS LIST

NON PATENT DOCUMENT

Non patent literature 1: Durst E. et al., Simultaneous spatial and temporal focus for axial scanning, Optics Express, 2006, 14, 12243

SUMMARY OF THE INVENTION

An optical device according to the present invention comprises: an amplifier that amplifies pulsed light; a dispersive element that disperses the pulsed light output from the amplifier; and an objective lens that focuses the pulsed light dispersed by the dispersive element, wherein an amplification factor of the amplifier can be changed.

An optical machining device according to the present invention comprises an optical device that scans a workpiece with pulsed light emitted thereto, wherein the optical device is the optical device described above.

A microscope device according to the present invention comprises an optical device that scans a sample with pulsed light emitted thereto, wherein the optical device is the optical device described above.

A scanning method according to the present invention includes: amplifying pulsed light using an amplifier; dispersing the pulsed light output from the amplifier, using a dispersive element; focusing the pulsed light dispersed by the dispersive element, using an objective lens; and performing scanning while changing a position at which temporal focus of the pulsed light focused using the objective lens occurs, in an optical axis direction of the objective lens, by changing an amplification factor of the amplifier.

BRIEF DESCRIPTION OF THE DRAWINGS

FIG. 1 is an outline configuration diagram showing an optical machining device that comprises an optical device according to a first embodiment;
FIG. 2 is a schematic diagram showing an example of an optical system that uses temporal focus;
FIG. 3 is a graph showing the relationship between the pulse duration of pulsed light output from an optical fiber amplifier, and the average output of the optical fiber amplifier;
FIG. 4 is a graph showing the relationship between the spectrum width of the pulsed light output from the optical fiber amplifier, and the average output of the optical fiber amplifier;
FIG. 5 is a graph showing the relationship between the amount of chirp (GDD) of the pulsed light output from the optical fiber amplifier, and the average output of the optical fiber amplifier;
FIG. 6 is an outline configuration diagram of a light source unit;
FIG. 7 is a plan view of a compressor;
FIG. 8 is a side view of the compressor;
FIG. 9 is a graph showing the compression characteristics of the pulse duration of the pulsed light output from the optical fiber amplifier;
FIG. 10 is a flowchart showing the flow of a scanning method with the pulsed light;
FIG. 11 is an outline configuration diagram of a light source unit according to a modified example;
FIG. 12 is a plan view of a compressor according to the modified example;
FIG. 13 is an outline configuration diagram of an optical device according to the modified example;
FIG. 14 is a graph showing the compression characteristics of the pulse duration of pulsed light in the optical device according to the modified example; and

FIG. 15 is an outline configuration diagram showing a microscope device that comprises an optical device according to a second embodiment.

## DESCRIPTION OF THE EMBODIMENTS

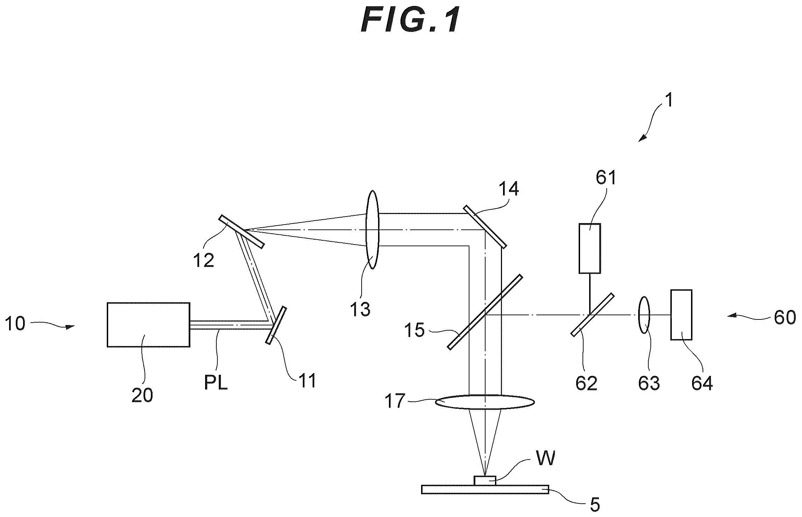

Preferred embodiments of the present invention are described below. First, an optical machining device according to a first embodiment is described with reference to FIG. 1. As shown in FIG. 1, the optical machining device 1 according to the first embodiment comprises a stage 5, an optical device 10, and an observation unit 60. The optical machining device 1 can process a workpiece W, which is a processing target object, in a desired shape, by controlling the optical device 10, the stage 5 and the like through a control device (not shown), based on processing data created in accordance with the desired shape. The workpiece W is placed on the upper surface of the stage 5. The material of the workpiece W may be, for example, metal, resin, or glass. The stage 5 may be configured so as to allow the workpiece W placed on the upper surface of the stage 5 to be displaced at least in a direction perpendicular to the optical axis of the optical machining device 1. By driving the stage 5 and adjusting the position of the workpiece W, pulsed light from the optical device 10 can be emitted even to a position beyond an after-mentioned scanning width of the optical device 10.

The observation unit 60 comprises an illumination light source 61, a half mirror 62, an imaging lens 63, and an image pickup unit 64. The observation unit 60 further includes a dichroic mirror 15 and an objective lens 17 of the optical device 10. The illumination light source 61 is configured to include an LED (Light Emitting Diode) or the like. The illumination light source 61 emits illumination light in the wavelength band of visible light. The half mirror 62 reflects, toward the dichroic mirror 15, part of the illumination light emitted from the illumination light source 61. The half mirror 62 transmits light that has been from the workpiece W and reflected by the dichroic mirror 15, toward the imaging lens 63. The ratio of the transmissivity to the reflectance of the half mirror 62 is set to, for example, 1:1. The imaging lens 63 focuses light that has been from the workpiece W and passed through the half mirror 62, and forms an image. The image pickup unit 64 is configured to include an image sensor, such as a CCD (Charge Coupled Device), a CMOS (Complementary Metal Oxide Semiconductor) or the like. The image pickup unit 64 picks up an image of the workpiece W formed by the imaging lens 63.

The image of the workpiece W picked up and acquired by the image pickup unit 64 is displayed on a display device, not shown. Through the image displayed on the display device, the workpiece W can be observed. Note that the control amounts for the optical device 10 and the stage 5 by the control device (not shown) may be corrected based on image data of the workpiece W picked up and acquired by the image pickup unit 64.

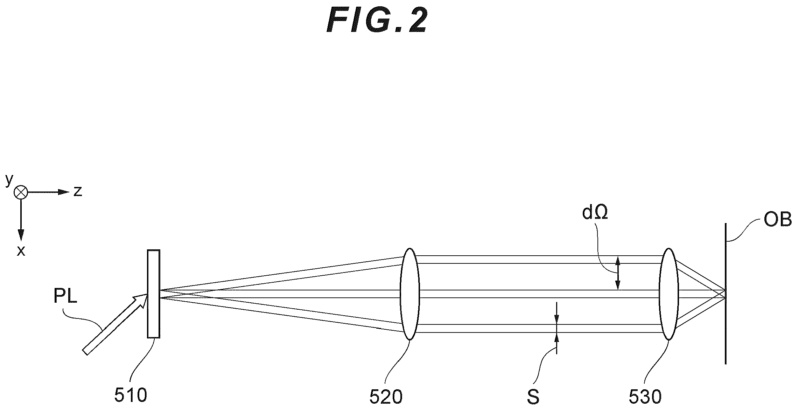

Next, the optical device 10 is described. The optical device 10 focuses the pulsed light PL on the workpiece W. The pulse duration of the pulsed light PL is a duration on the femtosecond (fs) scale, for example. Although such pulsed light PL is also called intense pulsed light, it is simply called "pulsed light" in the following description. To improve the resolutions in the optical axis directions of the optical machining device 1 and a microscope device 201 described later, a technique called temporal focus is used. In the following description, the technique called temporal focus is simply called "temporal focus" in some cases. The optical axis direction of the optical machining device 1 (or a microscope device 101) that includes the optical device 10 is called a z-direction, and directions perpendicular to the optical axis are called an x-direction and a y-direction in some cases. For example, directions indicated by arrows in FIGS. 2, 7, 8, and 11 are called the x-direction, y-direction, and the z-direction.

Here, a case where the pulsed light is focused on an object surface (for example, a surface of the workpiece W to be processed) is discussed. The focus radius of the pulsed light is assumed as w, the wavenumber of the pulsed light is assumed as k, and the wavelength of the pulsed light is assumed as $\lambda$. In this case, the range in the z-direction in which the beam diameter of the pulsed light is substantially constant, i.e., the confocal length, is represented by $kw^2 = 2\pi w^2/\lambda$. As the focus radius w of the pulsed light is reduced, the confocal length decreases, and the resolution of the optical machining device 1 in the optical axis direction (z-direction) is improved. For example, when the wavelength $\lambda$ of the pulsed light is set to 1 $\mu$m, and the focus radius w of the pulsed light is reduced to about 1 $\mu$m, a high light intensity area of the pulsed light (i.e., confocal length) is a limited area of about 6 $\mu$m in the z-direction. If the focus radius w of the pulsed light is increased to about 50 $\mu$m, the confocal length becomes about 16 mm, and the resolution of the optical machining device 1 in the optical axis direction (z-direction) decreases.

A technique called temporal focus that can improve the resolution in the optical axis direction (z-direction) even if the focus radius w of the pulsed light is increased has been proposed. An example of the optical system using temporal focus is shown in FIG. 2. In FIG. 2, a diffraction grating 510 disperses the pulsed light PL emitted from a light source unit (not shown), through the diffraction phenomenon. The pulsed light PL dispersed by the diffraction grating 510 enters a collimating lens 520. The pulsed light PL having passed through the collimating lens 520 is collimated and enters an objective lens 530. The pulsed light PL having passed through the objective lens 530 is focused on an object surface OB disposed at the focal point of the objective lens 530. Note that in the following description, the object surface OB is assumed as the surface to be processed, unless otherwise noted.

The diffraction grating 510 and the object surface OB are conjugate with each other. As pulsed light PL dispersed by the diffraction grating 510 approaches the collimating lens 520, the pulse duration of the pulsed light PL increases. When the pulsed light PL passes through the collimating lens 520 and the objective lens 530, and reaches the object surface OB, which is conjugate with the diffraction grating 510, the pulse duration of the pulsed light PL decreases, and the original pulse duration at entry to the diffraction grating 510 is restored. Such a phenomenon is called temporal focus. Since the pulse duration of the pulsed light PL is relatively long at a position apart from the object surface OB in the z-direction, the peak power of the pulsed light PL decreases, and the processing efficiency with the pulsed light PL decreases. As a result, the resolution of the optical machining device 1 in the optical axis direction (z-direction) can be improved.

In the optical system that uses temporal focus and is shown as an example in FIG. 2, the pulse duration of the pulsed light PL adjacent to the object surface OB is approximately represented by the following expression (1).

[Expression 1]

$$\tau(z) = \tau_0 \sqrt{1 + \left(\frac{z}{z_R}\right)^2} \quad \cdots (1)$$

where $\tau_0$ indicates the pulse duration of the pulsed light PL in a case where the pulsed light PL is Fourier transform limited pulse (Transform Limited Pulse), i.e., with no chirp, and GDD (Group Delay Dispersion) = 0. It is herein assumed that pulsed light PL with the Fourier transform limited pulse enters the diffraction grating 510. $z_R$ is approximately represented by the following expression (2).

[Expression 2]

$$z_R \approx \frac{2f^2}{k_0 \alpha^2 \Omega^2} \quad \cdots (2)$$

where f indicates the focal length of the objective lens 530. $k_0$ indicates the wavenumber at the center frequency of the spectrum of the pulsed light PL dispersed by the diffraction grating 510. The coordinate in the x-direction at an incident position of a monochromatic wave with a frequency $\omega$ in the spectrum of the pulsed light PL onto the objective lens 530 is represented by $x = \alpha\omega$. Note that the frequency $\omega$ is offset so as to make the center frequency of the spectrum of the pulsed light PL zero (0). $\alpha$ is a coefficient determined depending on the dispersion (or the lineal density, the incident angle) of the diffraction grating 510, the focal length fc of the collimating lens 520 and the like. $\Omega$ is the maximum frequency of the spectrum of the pulsed light PL. The width of the pulsed light PL in the x-direction (i.e., the width of the pulsed light PL dispersed by the diffraction grating 510 in the dispersion direction) at the incident position of the pulsed light PL on the objective lens 530 is substantially $2\alpha\Omega$. It is herein assumed that the diameter s (see FIG. 2) of the monochromatic wave in the spectrum of the pulsed light PL is s << $\alpha\Omega$.

The position with z = 0 corresponds to a position conjugate with the diffraction grating 510. As shown by the expression (1), with z = 0, the pulse duration of the pulsed light PL is the minimum, and with z > $z_R$, the increase in the pulse duration of the pulsed light PL is significant. Consequently, since with z > $z_R$, the pulse duration of the pulsed light PL increases, and the peak power of the pulsed light PL decreases, it can be considered that the resolution of the optical machining device 1 in the optical axis direction (z-direction) is about $z_R$. For example, in a case where f = 10 mm, $\alpha\Omega$ = 3 mm, and $\lambda$ = 1 $\mu$m, $z_R$ is about 3 $\mu$m. That is, even if the focus radius w of the pulsed light is set to about 50 $\mu$m, the resolution of the optical machining device 1 in the z-direction is on the micrometer scale due to the effect of temporal focus. Since the effect of temporal focus thus increases the resolution of the optical machining device 1 in the optical axis direction (z-direction) even with increase in focus radius of the pulsed light, microfabrication, such as removal processing, can be applied to the workpiece. In a case where the material of the workpiece is transparent resin or glass, the effect of temporal focus allows microfabrication to be applied to the inside of the workpiece. By setting the peak power of the pulsed light at the position with z = 0 to about a processing threshold that allows processing to the workpiece, the resolution (processing resolution) of the optical machining device 1 in the optical axis direction can be further improved.

The position in the z-direction at which temporal focus occurs can be changed by chirping the pulsed light PL (the frequency is changed with time). The amount of chirp, at its lowest order, is represented using GDD (fs² or ps²). The relationship between the amount of chirp $\beta$ and the change $\Delta z$ in position in the z-direction at which temporal focus occurs is approximately represented by the following expression (3).

[Expression 3]

$$\Delta z \approx \beta \Omega^2 z_R \quad \cdots (3)$$

where $\beta$ = GDD/2. For example, in a case where $\beta$ = 10000 fs² (GDD = 20000 fs²) , $z_R$~10 $\mu$m, and $\Omega$~0.033 rad/fs (corresponding to pulsed light of ~70fs) are satisfied, $\Delta z \sim 110$ μm holds.

To chirp the pulsed light with a Fourier transform limited pulse, a method of transmission through a glass material, such as quartz, a method of using a prism pair or a diffraction grating pair (grating pair), or the like can be used. In the case of using a prism pair, the GDD of the pulsed light can be changed by changing the gap between prisms or the degree of insertion of each prism into the optical path. In the case of using a diffraction grating pair (grating pair), the GDD of the pulsed light can be changed by changing the gap between the diffraction gratings. Document "Durst E. et al., Simultaneous spatial and temporal focus for axial scanning, Optics Express, 2006, 14, 12243" empirically demonstrates that change of about 11,000 $fs^2$ in GDD by adjusting a prism pair can change the position at which temporal focus occurs by 140 μm. Since this method mechanically changes the position of the prism, it takes time to change the position at which temporal focus occurs. The present embodiment combines the light source unit including the optical fiber amplifier with the optical system using temporal focus, and changes, at high speed, the position at which temporal focus occurs.

The optical fiber amplifier includes an optical fiber that has a length ranging from one to several tens of meters. The core diameter of the optical fiber approximately ranges from several to several tens of micrometers. Since such a long optical fiber with a small core diameter is used, both the dispersion and non-linearity of the optical fiber amplifier are high. When the pulsed light is amplified by the optical fiber amplifier, the pulse duration and the spectrum width of the pulsed light output from the optical fiber amplifier change depending on the amplification factor of the optical fiber amplifier. The chirp (GDD) of the pulsed light is approximately proportional to "pulse duration/spectrum width (ps/nm)". Note that between ps/nm and $ps^2$ there are a relationship of ps/nm = -1.68 $ps^2$ with respect to pulsed light with a center wavelength of 1.06 μm, for example. The way of change of the pulse duration of pulsed light against the change of the amplification factor of the optical fiber amplifier is generally different from the way of change the spectrum width of pulsed light against the change of the amplification factor of the optical fiber amplifier. Consequently, the chirp (GDD) of pulsed light is expected to be changed depending on the amplification factor of the optical fiber amplifier.

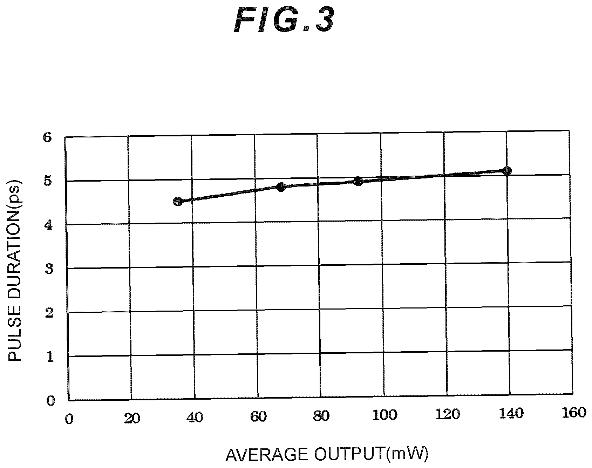

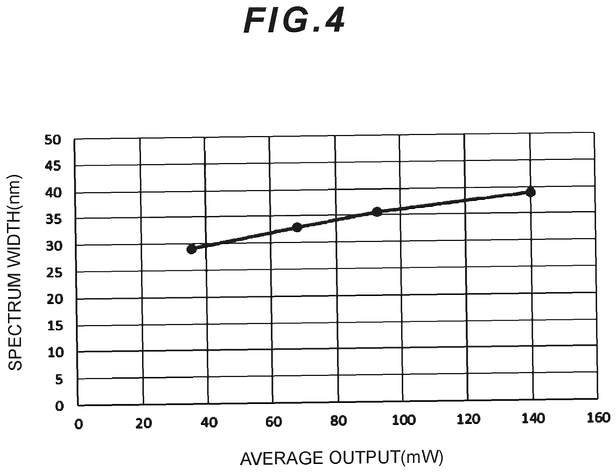

FIG. 3 shows the relationship between the pulse duration of pulsed light output from the optical fiber amplifier, and the average output of the optical fiber amplifier. FIG. 4 shows the relationship between the spectrum width of the pulsed light output from the optical fiber amplifier, and the average output of the optical fiber amplifier. In graphs indicated by FIGS. 3 and 4, pulsed light with a period = 350 fs and a wavelength = 1.56 μm is used as input into the optical fiber amplifier. An erbium doped fiber amplifier (EDFA) with a length of ~16 m, a mode field diameter (MFD) of ~5 μm, and normal dispersion is used as the optical fiber amplifier. The average output of the optical fiber amplifier is proportional to the pulse energy of pulsed light (energy per pulse). FIGS. 3 and 4 show that with respect to the increase rate of the pulse duration when the average output of the optical fiber amplifier, i.e., pulse energy, is increased, the increase rate of the spectrum width when the pulse energy is increased is high.

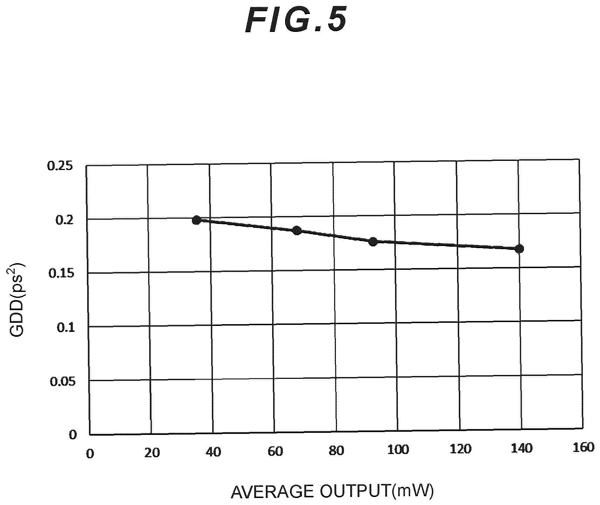

FIG. 5 shows the relationship between the amount of chirp (GDD) of the pulsed light output from the optical fiber amplifier, and the average output of the optical fiber amplifier obtained from FIGS. 3 and 4. FIG. 5 shows that the amount of chirp (GDD) of pulsed light output from the optical fiber amplifier changes in a range from 0.17 to 0.2 $ps^2$ (170,000 to 200,000 $fs^2$), depending on the change in the average output of the optical fiber amplifier, i.e., the change in pulse energy.

As shown in FIG. 1, the optical device 10 according to the first embodiment includes a light source unit 20, a first mirror 11, a diffraction grating 12, a collimating lens 13, a second mirror 14, a dichroic mirror 15, and an objective lens 17. The light source unit 20 emits, for example, pulsed light PL in a wavelength band of 1 μm. The first mirror 11 reflects the pulsed light PL emitted from the light source unit 20, toward the diffraction grating 12. The diffraction grating 12 disperses the pulsed light PL reflected by the first mirror 11, through the diffraction phenomenon. The collimating lens 13 collimates the pulsed light PL dispersed by the diffraction grating 12.

The second mirror 14 reflects the pulsed light PL having passed through the collimating lens 13, toward the dichroic mirror 15. Note that instead of the second mirror 14, a galvanometer mirror (not shown) that reflects the pulsed light PL having passed through the collimating lens 13 toward the dichroic mirror 15 may be provided. The galvanometer mirror can change the traveling direction of the pulsed light PL by changing the orientation of the reflective surface. By changing the traveling direction of the pulsed light PL by the galvanometer mirror, a flat surface (surface to be processed) of the workpiece W that is perpendicular to the optical axis of the objective lens 17 can be scanned. Preferably, the galvanometer mirror is provided at the position of the pupil of the objective lens 17 or a position conjugate with the pupil.

The dichroic mirror 15 transmits the pulsed light PL having entered the dichroic mirror 15, toward the objective lens 17. The dichroic mirror 15 reflects the illumination light from the observation unit 60 (half mirror 62) having entered the dichroic mirror 15, toward the objective lens 17. The dichroic mirror 15 reflects light (visible light) from the workpiece W having entered the dichroic mirror 15 through the objective lens 17, toward the observation unit 60 (half mirror 62).

The objective lens 17 focuses the pulsed light PL having passed through the dichroic mirror 15, on the workpiece W. Note that the diffraction grating 12 and the workpiece W (surface to be processed) are conjugate with each other. The objective lens 17 illuminates the workpiece W with the illumination light reflected by the dichroic mirror 15. The light from the workpiece W illuminated with the illumination light enters the objective lens 17. The light (visible light) from the workpiece W having entered the objective lens 17 passes through the objective lens 17 and is reflected by the dichroic mirror 15.

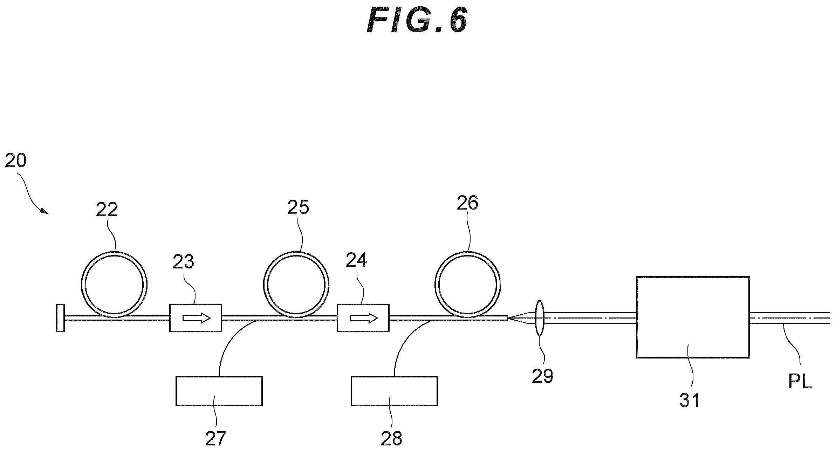

Next, the light source unit 20 is described with reference to FIGS. 6 to 8. As shown in FIG. 6, the light source unit 20 includes an oscillator 22, a first optical isolator 23, a second optical isolator 24, a first optical fiber amplifier 25, a second optical fiber amplifier 26, a collimating lens 29, and a compressor 31. The oscillator 22 is configured to include a mode-locked fiber laser. The oscillator 22 generates pulsed light with a Fourier transform limited pulse with a pulse duration ranging from about 100 fs to 1 ps. The first optical isolator 23 is provided between the oscillator 22 and the first optical fiber amplifier 25. The second optical isolator 24 is provided between the first optical fiber amplifier 25 and the second optical fiber amplifier 26. The first optical isolator 23 and the second optical isolator 24 transmit only pulsed light traveling in a forward direction, and blocks light traveling in the opposite direction.

The first optical fiber amplifier 25 is configured to include an erbium doped fiber amplifier (EDFA) with normal dispersion. The first optical fiber amplifier 25 may be configured to include an ytterbium doped fiber amplifier (YDFA) with normal dispersion. The first optical fiber amplifier 25 is provided with a first pump LD (laser diode) 27. The first pump LD 27 allows excitation light (also called pump light) to enter the first optical fiber amplifier 25. The first optical fiber amplifier 25 amplifies the pulsed light generated by the oscillator 22, using excitation light incident from the first pump LD 27. By changing the excitation current for the first pump LD 27, the amplification factor (i.e., output) of the first optical fiber amplifier 25 can be changed. The first optical fiber amplifier 25 is an optical fiber amplifier that has a longer length and a smaller core diameter than the second optical fiber amplifier 26. Accordingly, the characteristics of chirp (GDD) of the pulsed light is determined by the first optical fiber amplifier 25 having relatively greater dispersion and non-linearity.

The second optical fiber amplifier 26 is configured to include an erbium doped fiber amplifier (EDFA). The second optical fiber amplifier 26 may be configured to include an ytterbium doped fiber amplifier (YDFA). The second optical fiber amplifier 26 is provided with a second pump LD (laser diode) 28. The second pump LD 28 allows excitation light (also called pump light) to enter the second optical fiber amplifier 26. The second optical fiber amplifier 26 amplifies the pulsed light output from the first optical fiber amplifier 25, using excitation light incident from the second pump LD 28. By changing excitation current for the second pump LD 28, the amplification factor (i.e., output) of the second optical fiber amplifier 26 can be changed. The second optical fiber amplifier 26 is an optical fiber amplifier that has a shorter length and has a larger core diameter than the first optical fiber amplifier 25. Accordingly, the output (pulse energy of pulsed light) is determined by the second optical fiber amplifier 26 having relatively less dispersion and non-linearity.

Using, as the amplifiers, the first optical fiber amplifier 25 having relatively greater dispersion and non-linearity and the second optical fiber amplifier 26 having relatively less dispersion and non-linearity can reduce the variation in pulse energy of the pulsed light while changing the amount of chirp (GDD) of the pulsed light output from the amplifiers (the first optical fiber amplifier 25 and the second optical fiber amplifier 26). Note that instead of the second optical fiber amplifier 26, a solid-state amplifier may be provided as a second amplifier. In a case where greater pulse energy is required, a third amplifier may be provided after the second amplifier. If the variation in pulse energy along with the change in the amount of chirp (GDD) of the pulsed light is allowed, the second optical fiber amplifier 26 may be omitted. In this case, in the following description, the output of the second optical fiber amplifier 26 may be read as the output of the first optical fiber amplifier 25.

The collimating lens 29 collimates the pulsed light output from the second optical fiber amplifier 26. The compressor 31 compresses the pulse duration of the pulsed light having been output from the second optical fiber amplifier 26 and passed through the collimating lens 29, and emits pulsed light PL with a Fourier transform limited pulse.

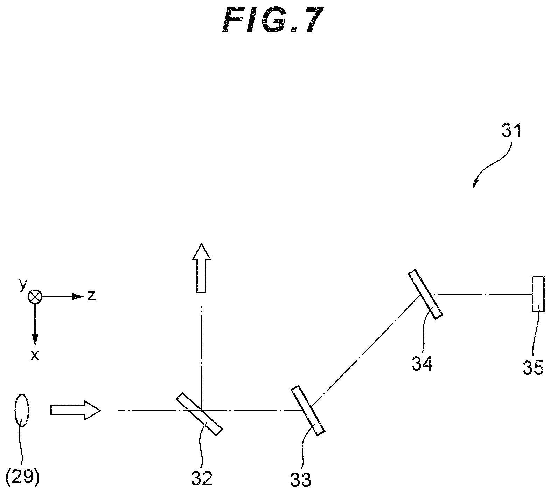

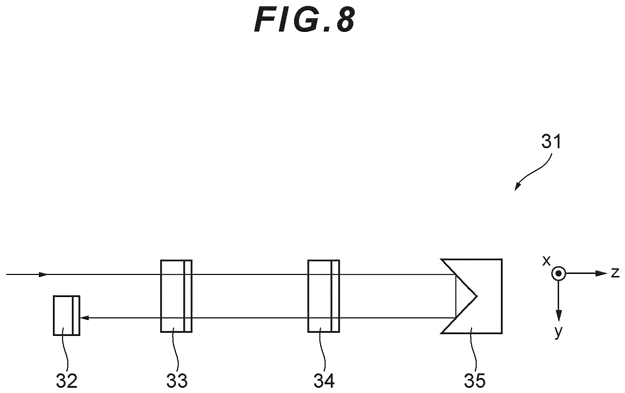

For example, as shown in FIGS. 7 and 8, the compressor 31 includes: an output mirror 32; a diffraction grating pair made up of a first diffraction grating 33 and a second diffraction grating 34; and a roof mirror 35. The pulsed light having passed through the collimating lens 29 passes through a position apart from the output mirror 32 in the -y-direction perpendicular to the optical axis. The pulsed light having passed through the output mirror 32 is spatially dispersed by the first diffraction grating 33 and the second diffraction grating 34. The pulsed light dispersed by the first diffraction grating 33 and the second diffraction grating 34 is reflected by the roof mirror 35, and is returned to the second diffraction grating 34 and the first diffraction grating 33 in this order. Since the pulsed light returned in the order of second diffraction grating 34 and the first diffraction grating 33 is offset in +y-direction by the roof mirror 35, it is reflected by the output mirror 32 and is emitted to the outside (first mirror 11). While such a compressor 31 has a negative dispersion (GDD < 0), the dispersion of the compressor 31 can be changed by changing the gap between the first diffraction grating 33 and the second diffraction grating 34.

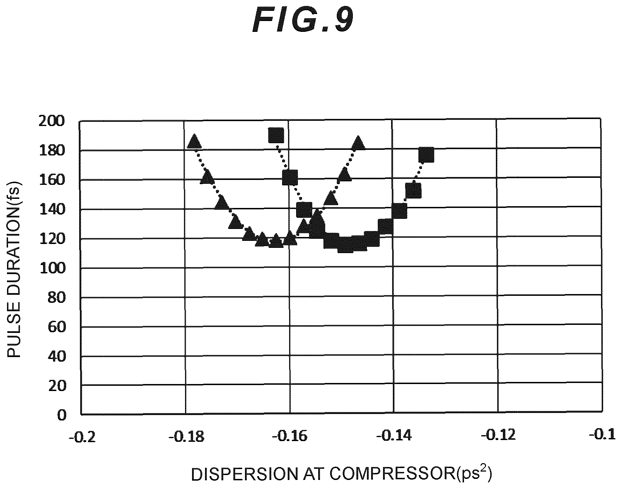

FIG. 9 shows the compression characteristics of the pulse duration of the pulsed light output from the amplifiers with the two-stage configuration (the first optical fiber amplifier 25 and the second optical fiber amplifier 26) shown in FIG. 6. The abscissa axis of a graph shown in FIG. 9 indicates the amount of dispersion ($ps^2 = 10^6 fs^2$) of the compressor 31 that includes the diffraction grating pair disposed after the first optical fiber amplifier 25 and the second optical fiber amplifier 26, and the ordinate axis indicates the pulse duration (fs) of the pulsed light. Symbols ▲ in the graph shown in FIG. 9 indicate the compression characteristics in the case where the excitation current for the first pump LD 27 of the first optical fiber amplifier 25 was 600 mA. Symbols ■ in the graph shown in FIG. 9 indicate the compression characteristics in the case where the excitation current for the first pump LD 27 of the first optical fiber amplifier 25 was 1,000 mA. Note that in both cases where the excitation current for the first pump LD 27 of the first optical fiber amplifier 25 was 600 and 1000 mA, the excitation current of the second pump LD 28 of the second optical fiber amplifier 26 was constant. When the excitation current of the first pump LD 27 of the first optical fiber amplifier 25 was 600 mA, the amount of dispersion of the compressor 31 to obtain the minimum pulse duration was -0.163 ps$^2$, i.e., the amount of chirp (GDD) of the pulsed light was +0.163 ps$^2$. When the excitation current for the first pump LD 27 of the first optical fiber amplifier 25 was 1,000 mA, the amount of dispersion of the compressor 31 to obtain the minimum pulse duration was -0.148 ps$^2$, i.e., the amount of chirp (GDD) of the pulsed light was +0.148 ps$^2$. This shows that by changing the excitation current for the first pump LD 27 of the first optical fiber amplifier 25 in a range from 600 mA to 1,000 mA, the amount of chirp (GDD) of the pulsed light output from the amplifiers with the two-stage configuration (the first optical fiber amplifier 25 and the second optical fiber amplifier 26) can be changed by 0.015 ps$^2$ = 15,000 fs$^2$.

In the case where the excitation current for the first pump LD 27 of the first optical fiber amplifier 25 was 600 mA, the output of the second optical fiber amplifier 26 was 477 mW. In the case where the excitation current for the first pump LD 27 of the first optical fiber amplifier 25 was 1,000 mA, the output of the second optical fiber amplifier 26 was 537 mW. Since in this experiment the excitation current for the second pump LD 28 of the second optical fiber amplifier 26 was maintained constant, the output of the second optical fiber amplifier 26 slightly varied, but by adjusting the excitation current for the second pump LD 28, the output of the second optical fiber amplifier 26 is allowed to be maintained in a constant range. In both cases where the excitation current for the first pump LD 27 of the first optical fiber amplifier 25 was 600 mA and 1,000 mA, the minimum pulse duration of the pulsed light was substantially identical (~115 fs). As described above, according to the amplifiers with the two-stage configuration (the first optical fiber amplifier 25 and the second optical fiber amplifier 26) shown in FIG. 6, only the amount of chirp (GDD) of the pulsed light can be changed while maintaining the pulse energy of the pulsed light and the minimum pulse duration after compression.

Note that since $\Delta$GDD~15,000 fs$^2$ and $\Omega$~0.02 rad/fs (corresponding to pulsed light with ~115 fs) hold in the example of the amplifiers with the two-stage configuration (the first optical fiber amplifier 25 and the second optical fiber amplifier 26) shown in FIG. 6, $\Delta z$~3$\times z_R$ holds according to the expression (3) described above. As described with the aforementioned expression (2), $z_R$ is set using the dispersion of the diffraction grating 12 (or lineal density, or incident angle), the coefficient $\alpha$ determined by the focal length fc of the collimating lens 13 and the like, the focal length f of the objective lens 17, and the like. If it is set that $z_R$ = 10 $\mu$m, the positional change $\Delta z$ in the z-direction that causes temporal focus is 30 $\mu$m. That is, in the example described above, by modulating the excitation current for the first pump LD 27 between 600 mA and 1000 mA, scanning can be performed with the position at which temporal focus occurs being changed in the optical axis direction (z-direction) by 30 $\mu$m.

In the case where the first optical fiber amplifier 25 and the second optical fiber amplifier 26 are erbium doped fiber amplifiers (EDFA) or ytterbium doped fiber amplifiers (YDFA), the response of gain to the modulation of excitation light (pump light) for the first pump LD 27 and the second pump LD 28 (i.e., the response of gain to the modulation of excitation current) is present up to ~10 kHz in many cases, although it varies depending on the core diameter and the excitation state. That is, the gains of the first optical fiber amplifier 25 and the second optical fiber amplifier 26 can be changed at a high speed of ~10 kHz. Based on the experiment result described above, it means that the amount of chirp (GDD) of the pulsed light can be approximately changed by ~10 kHz. According to this method, the amount of chirp (GDD) of the pulsed light can be easily changed at high speed in comparison with a mechanical method, such as of changing the position of the prism. Since the gains (amplification factors) of the first optical fiber amplifier 25 and the second optical fiber amplifier 26 can be changed at high speed by modulating the excitation currents for the first pump LD 27 and the second pump LD 28 at high speed as described above, the amount of chirp (GDD) of the pulsed light can be changed at high speed, and scanning in the optical axis direction (z-direction) can be performed at high speed by changing, at high speed, the position at which temporal focus occurs.

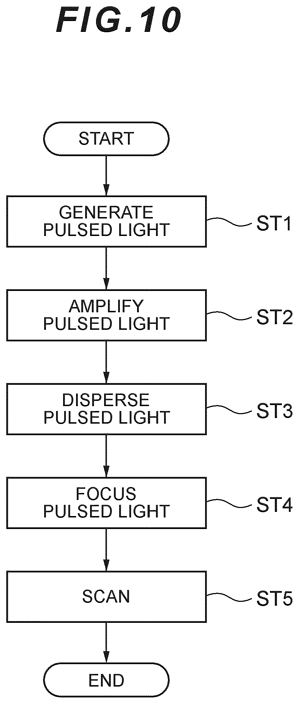

Next, a scanning method with pulsed light using the optical device 10 of the optical machining device 1 configured as described above is described. FIG. 10 is a flowchart showing the flow of the scanning method with the pulsed light. First, pulsed light is generated by the oscillator 22 of the light source unit 20 (step ST1). In this case, the oscillator 22 generates pulsed light with a Fourier transform limited pulse.

Next, the pulsed light is amplified by the first optical fiber amplifier 25 and the second optical fiber amplifier 26 (step ST2). The pulsed light emitted from the oscillator 22 passes through the first optical isolator 23, and enters the first optical fiber amplifier 25. The first optical fiber amplifier 25 amplifies the pulsed light emitted from the oscillator 22. The pulsed light output from the first optical fiber amplifier 25 passes through the second optical isolator 24, and enters the second optical fiber amplifier 26. The second optical fiber amplifier 26 amplifies the pulsed light output from the first optical fiber amplifier 25. The pulsed light output from the second optical fiber amplifier 26 passes through the collimating lens 29 and is collimated, and enters the compressor 31. The compressor 31 compresses the pulse duration of the pulsed light having passed through the collimating lens 29, and emits pulsed light PL with Fourier transform limited pulse.

Next, the pulsed light is dispersed by the diffraction grating 12 (step ST3). The pulsed light PL emitted from the compressor 31 of the light source unit 20 is reflected by the first mirror 11, and enters the diffraction grating 12. The diffraction grating 12 disperses the pulsed light PL reflected by the first mirror 11, through the diffraction phenomenon. The pulsed light PL dispersed by the diffraction grating 12 passes through the collimating lens 13 and is collimated, and enters the second mirror 14. In this case, the spatial chirp of the pulsed light PL required for temporal focus is caused by the diffraction grating 12 and the collimating lens 13.

Next, the pulsed light is focused by the objective lens 17 (step ST4). The pulsed light PL reflected by the second mirror 14 passes through the dichroic mirror 15, and enters the objective lens 17. The objective lens 17 focuses the pulsed light PL having passed through the dichroic mirror 15, on the workpiece W. In this case, by the effect of the temporal focus, the pulse duration of the pulsed light PL is reduced, and the original pulse duration at entry to the diffraction grating 12 is restored on the surface of the workpiece W to be processed. For example, even if the focus radius w of the pulsed light PL is set to about 50 $\mu$m, the resolution of the optical machining device 1 in the optical axis direction (z-direction) can be improved by the effect of the temporal focus, and microfabrication, such as removal processing, can be applied to the workpiece W. In the case where the material of the workpiece W is transparent resin or glass, the effect of temporal focus allows microfabrication to be applied to the inside of the workpiece W. Note that as described above, the pulse duration of the pulsed light PL focused by the objective lens 17 becomes the pulse duration of the pulsed light PL at entry to the diffraction grating 12 due to occurrence of temporal focus. This also encompasses not only a case where the pulse duration of the pulsed light PL focused by the objective lens 17 becomes (completely) identical to the pulse duration of the pulsed light PL at entry to the diffraction grating 12, but also a case of becoming substantially identical to the pulse duration of the pulsed light PL at entry to the diffraction grating 12.

Scanning is performed while changing the position at which temporal focus occurs in the optical axis direction of the objective lens 17 (step ST5). In this case, by modulating the excitation currents for the first pump LD 27 and the second pump LD 28, the amplification factors of the first optical fiber amplifier 25 and the second optical fiber amplifier 26 are changed. Accordingly, the amount of chirp (GDD) of the pulsed light PL is changed, and scanning in the optical axis direction (z-direction) is performed while changing the position at which temporal focus occurs in the optical axis direction of the objective lens 17. Note that in a state where the pulsed light PL from the optical device 10 is continuously emitted to the workpiece W, the step of generating the pulsed light (ST1), the step of amplifying the pulsed light (ST2), the step of dispersing the pulsed light (ST3), the step of focusing the pulsed light (ST4), and the step of performing scanning (ST5) described above are performed in parallel.

According to the first embodiment, the optical device 10 of the optical machining device 1 includes the first optical fiber amplifier 25 and the second optical fiber amplifier 26 that amplify pulsed light, the diffraction grating 12 that disperses the pulsed light, and the objective lens 17 that focuses the pulsed light dispersed by the diffraction grating 12, and can independently change the amplification factors of the first optical fiber amplifier 25 and the second optical fiber amplifier 26. Note that the pulse duration of the pulsed light focused by the objective lens 17 becomes the pulse duration of the pulsed light at entry to the diffraction grating 12 due to occurrence of temporal focus. Since the amplification factor of the first optical fiber amplifier 25 can be changed at high speed by modulating the excitation current for the first pump LD 27 at high speed as described above, the amount of chirp (GDD) of the pulsed light can be changed at high speed, and scanning in the optical axis direction can be performed at high speed by changing, at high speed, the position at which temporal focus occurs (position in the z-direction). Since the resolution of the optical machining device 1 in the optical axis direction (z-direction) is improved due to the effect of temporal focus, microfabrication, such as removal processing, can be applied to the workpiece W at high speed by changing the position at which temporal focus occurs (position in the z-direction) at high speed. The amplification factor of the second optical fiber amplifier 26 is adjusted by appropriately controlling the excitation current for the second pump LD 28, and the variation in the output of pulsed light can be confined in a constant range while changing the amount of chirp (GDD) of the pulsed light.

The pulse energy of the pulsed light may be controlled by installing a light intensity adjuster, such as an acousto-optical element (AOM), on an input side or an output side of the second optical fiber amplifier 26. This can reduce the variation in the pulse energy of the pulsed light while changing the amount of chirp (GDD) of the pulsed light.

A compressor 31 that compresses the pulse duration of the pulsed light output from the second optical fiber amplifier 26 may be provided. Accordingly, the pulsed light with a Fourier transform limited pulse can be obtained.

While the oscillator 22 is provided in the first embodiment described above, there is no limitation to this. For example, no oscillator 22 may be provided, and the first optical fiber amplifier 25 may amplify the pulsed light from a pulsed light generator provided outside the optical machining device 1. In this case, the step of generating the pulsed light (ST1) described above may be omitted.

While the diffraction grating 12 that disperses the pulsed light through the diffraction phenomenon is provided in the first embodiment described above, there is no limitation to this. As a dispersive element that disperses the pulsed light, a prism or the like may be provided instead of the diffraction grating 12. Note that the dispersion of pulsed light by the dispersive element means spatial separation of the optical path for the pulsed light depending on the wavelength of the pulsed light.

While the amplification factors of the first optical fiber amplifier 25 and the second optical fiber amplifier 26 are changed by modulating the excitation currents for the first pump LD 27 and the second pump LD 28 in the first embodiment described above, there is no limitation to this. For example, by controlling the light intensity of the input pulsed light by the acousto-optical element (AOM) or the like provided on the input side of the first optical fiber amplifier 25, the amplification factor of the first optical fiber amplifier 25 may be effectively changed, and the amount of chirp (GDD) of the pulsed light may be changed. By controlling the light intensity of the pulsed light by the acousto-optical element (AOM) or the like provided on the input side or the output side of the second optical fiber amplifier 26, the amplification factor of the second optical fiber amplifier 26 may be effectively changed, and the output of the second optical fiber amplifier 26 may be maintained within a constant range.

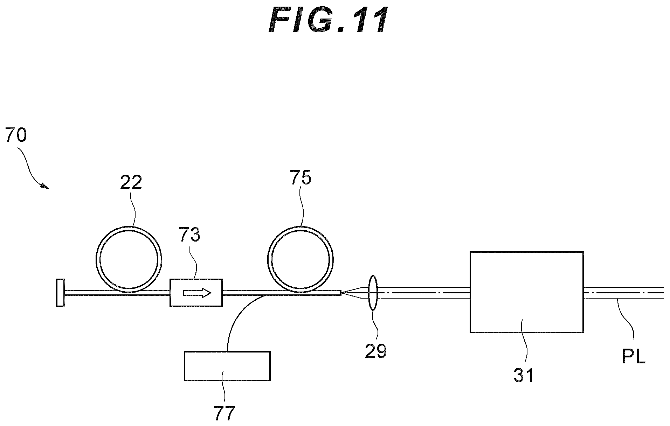

While the light source unit 20 includes the amplifiers with the two-stage configuration (the first optical fiber amplifier 25 and the second optical fiber amplifier 26) in the first embodiment described above, there is no limitation to this, and only one amplifier may be provided. For example, as shown in FIG. 11, a light source unit 70 may include an oscillator 22, an optical isolator 73, an optical fiber amplifier 75, a collimating lens 29, and a compressor 31. Note that the optical isolator 73 is configured similarly to the first optical isolator 23 according to the first embodiment. The optical fiber amplifier 75 is configured similarly to the first optical fiber amplifier 25 according to the first embodiment. The collimating lens 29 collimates the pulsed light output from the optical fiber amplifier 75. The optical fiber amplifier 75 is provided with a pump LD 77. The pump LD 77 is configured similarly to the first pump LD 27 according to the first embodiment, and can change the amplification factor (i.e., output) of the optical fiber amplifier 75 by changing the excitation current for the pump LD 77. Alternatively, no oscillator 22 may be provided, and the optical fiber amplifier 75 may amplify pulsed light from a pulsed light generator provided outside the optical machining device 1.

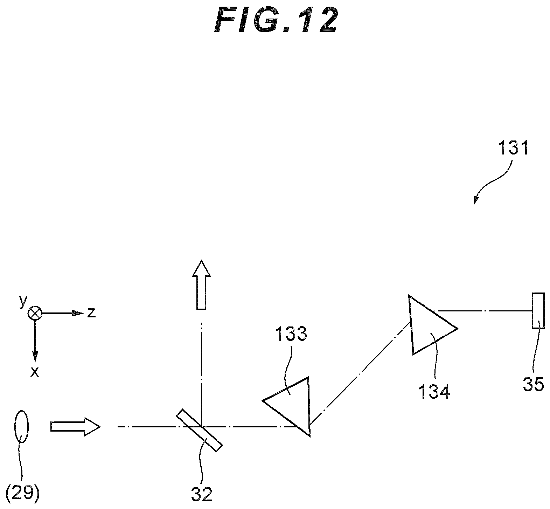

While the compressor 31 is configured to include the diffraction grating pair (grating pair) in the first embodiment described above, there is no limitation to this, and the configuration may include a prism pair. For example, as shown in FIG. 12, a compressor 131 may include: an output mirror 32; a prism pair made up of a first prism 133 and a second prism 134; and a roof mirror 35. The pulsed light having passed through the collimating lens 29 passes through a position apart from the output mirror 32 in the -y-direction perpendicular to the optical axis. The pulsed light having passed through the output mirror 32 is spatially dispersed by the first prism 133 and the second prism 134. The pulsed light dispersed by the first prism 133 and the second prism 134 is reflected by the roof mirror 35, and is returned to the second prism 134 and the first prism 133 in this order. Since the pulsed light returned in the order of the second prism 134 and the first prism 133 is offset in +y-direction by the roof mirror 35, it is reflected by the output mirror 32 and is emitted to the outside (first mirror 11). While such a compressor 131 has a negative dispersion (GDD < 0), the dispersion of the compressor 131 can be changed by changing the gap between the first prism 133 and the second prism 134.

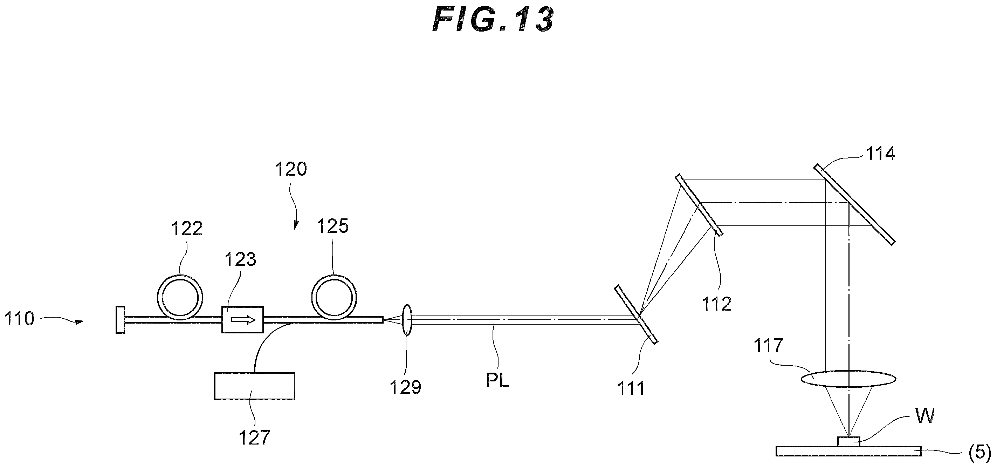

While the compressor 31 is provided in the light source unit 20 in the first embodiment described above, there is no limitation to this, and the compressor 31 is not necessarily provided in the light source unit. For example, as shown in FIG. 13, an optical device 110 according to a modified example includes: a light source unit 120; a diffraction grating pair made up of a first diffraction grating 111 and a second diffraction grating 112; a mirror 114; and an objective lens 117. The light source unit 120 includes an oscillator 122, an optical isolator 123, an optical fiber amplifier 125, and a collimating lens 129.

The oscillator 122 is configured to use a mode-locked fiber laser. The oscillator 122 generates pulsed light with a Fourier transform limited pulse having a pulse duration approximately ranging from 100 fs to 1 ps. The optical isolator 123 is provided between the oscillator 122 and the optical fiber amplifier 125. The optical isolator 123 transmits only pulsed light traveling in the forward direction, and blocks light traveling in the opposite direction.

The optical fiber amplifier 125 is configured to include an erbium doped fiber amplifier (EDFA) with normal dispersion. The optical fiber amplifier 125 may be configured to include an ytterbium doped fiber amplifier (YDFA). The optical fiber amplifier 125 is provided with a pump LD (laser diode) 127. The pump LD 127 allows excitation light (pump light) to enter the optical fiber amplifier 125. The optical fiber amplifier 125 amplifies the pulsed light generated by the oscillator 122, using excitation light incident from the pump LD 127. By changing excitation current for the pump LD 127, the amplification factor (i.e., output) of the optical fiber amplifier 125 can be changed. The collimating lens 129 collimates the pulsed light output from the optical fiber amplifier 125. Note that the optical fiber amplifier may be amplifiers with the two-stage configuration (the first optical fiber amplifier 25 and the second optical fiber amplifier 26) according to the first embodiment described above. Alternatively, the oscillator 122 is not necessarily provided, and the optical fiber amplifier may amplify pulsed light from a pulsed light generator provided outside the optical machining device 1.

The light source unit 120 emits the pulsed light PL having a positive chirp, through the optical fiber amplifier 125. Provided that the GDD of the pulsed light PL emitted from the light source unit 120 is Dp, Dp > 0 holds. The pulsed light PL emitted from the light source unit 120 is spatially dispersed by the first diffraction grating 111 and the second diffraction grating 112. The dispersion at the diffraction grating pair made up of the first diffraction grating 111 and the second diffraction grating 112 is assumed as Dg. In this case, the gap between the first diffraction grating 111 and the second diffraction grating 112 is adjusted so as to satisfy Dg = -Dp. The pulsed light PL having passed through the diffraction grating pair made up of the first diffraction grating 111 and the second diffraction grating 112 causes spatial chirp. Since the pulsed light PL having passed through the diffraction grating pair has a spatially separated frequency component, the GDD of the pulsed light PL is zero (i.e., Dp + Dg = 0), but the pulse duration is not that with a Fourier transform limited pulse. Since a compressor having a typical diffraction grating pair allows pulsed light to pass through the diffraction grating pair twice (double pass), no spatial chirp occurs, and a pulse duration with a Fourier transform limited pulse is achieved.

The pulsed light PL having passed through the diffraction grating pair made up of the first diffraction grating 111 and the second diffraction grating 112 is reflected by the mirror 114, and is focused on the workpiece W by the objective lens 117. Note that the dichroic mirror (not shown) according to the first embodiment described above may be provided between the mirror 114 and the objective lens 117. The pulsed light PL having passed through the diffraction grating pair (first diffraction grating 111 and the second diffraction grating 112) and caused a spatial chirp is focused by the objective lens 117, thereby achieving the effect of temporal focus. That is, the pulse duration of the pulsed light PL immediately after transmission through the objective lens 117 is the maximum, the pulse duration of the pulsed light PL decreases as approaching the workpiece W (focal plane of the objective lens 117), and the pulse duration of the pulsed light PL becomes the minimum on the surface of the workpiece W to be processed (focal plane of the objective lens 117).

It can also be said that in the optical device 110 according to the modified example, the diffraction grating pair made up of the first diffraction grating 111 and the second diffraction grating 112 removes the GDD of the pulsed light PL emitted from the light source unit 120, and at the same time, provides the pulsed light PL emitted from the light source unit 120 with a spatial chirp required for temporal focus. Since similar to the first embodiment described above, the amplification factor of the optical fiber amplifier 125 can be changed at high speed by modulating the excitation current for the pump LD 127 at high speed, the amount of chirp (GDD) of the pulsed light can be changed at high speed, and the position at which temporal focus occurs (position in the z-direction) can be changed at high speed. Since the resolution of the optical machining device 1 in the optical axis direction (z-direction) due to the effect of temporal focus is improved, microfabrication, such as removal processing, can be applied to the workpiece W at high resolution and high speed by changing the position at which temporal focus occurs (position in the z-direction) at high speed.

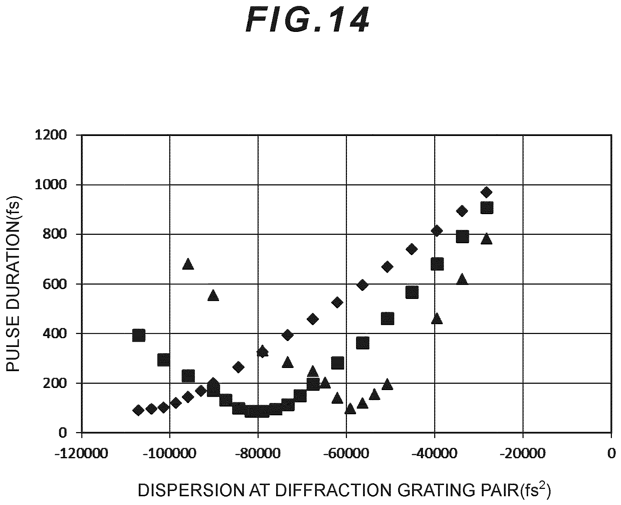

FIG. 14 shows the compression characteristics of the pulse duration of the pulsed light output from the optical fiber amplifier 125 of the optical device 110 according to the modified example. The abscissa axis of the graph shown in FIG. 14 indicates the amount of dispersion ($fs^2$) of the diffraction grating pair (first diffraction grating 111 and the second diffraction grating 112), as a compressor, disposed after the optical fiber amplifier 125, and the ordinate axis indicates the pulse duration (fs) of the pulsed light. Note that in the case where the compression characteristics in FIG. 14 was empirically acquired, the compressor had a double pass configuration. Symbols ♦ in the graph shown in FIG. 14 indicate the compression characteristics in the case where the excitation current for the pump LD 127 of the optical fiber amplifier 125 was 1.0 A. Symbols ■ in the graph shown in FIG. 14 indicate the compression characteristics in the case where the excitation current for the pump LD 127 of the optical fiber amplifier 125 was 2.8 A. Symbols ▲ in the graph shown in FIG. 14 indicate the compression characteristics in the case where the excitation current for the pump LD 127 of the optical fiber amplifier 125 was 5.0 A.

In the case where the excitation current for the pump LD 127 of the optical fiber amplifier 125 was 1.0 A, the output of the optical fiber amplifier 125 was 122 mW. In the case where the excitation current for the pump LD 127 of the optical fiber amplifier 125 was 2.8 A, the output of the optical fiber amplifier 125 was 918 mW. In the case where the excitation current for the pump LD 127 of the optical fiber amplifier 125 was 5.0 A, the output of the optical fiber amplifier 125 was 1,970 mW. As shown in FIG. 14, by changing the output of the optical fiber amplifier 125 in a range from 100 mW to 2,000 mW, the amount of chirp (GDD) of the pulsed light output from the optical fiber amplifier 125 can be changed by about 48,000 $fs^2$. In each of cases where the excitation current for the pump LD 127 of the optical fiber amplifier 125 was 1.0 A, 2.8 A, and 5.0 A, the minimum pulse duration of the pulsed light was substantially identical (~90 fs). As described above, according to the modified example shown in FIG. 13, the amount of chirp (GDD) of the pulsed light can be changed while maintaining the minimum pulse duration after compression of the pulsed light substantially constant.

Note that since $\Delta GDD{\sim}48,000\ fs^2$ and $\Omega{\sim}0.026$ rad/fs (corresponding to pulsed light of ~90 fs) hold in the optical device 110 according to the modified example, $\Delta z{\sim}16{\times}z_R$ holds according to the expression (3) described above. If similar to the first embodiment it is set that $z_R = 10\ \mu m$, the positional change $\Delta z$ in the z-direction that causes temporal focus is 160 $\mu m$.

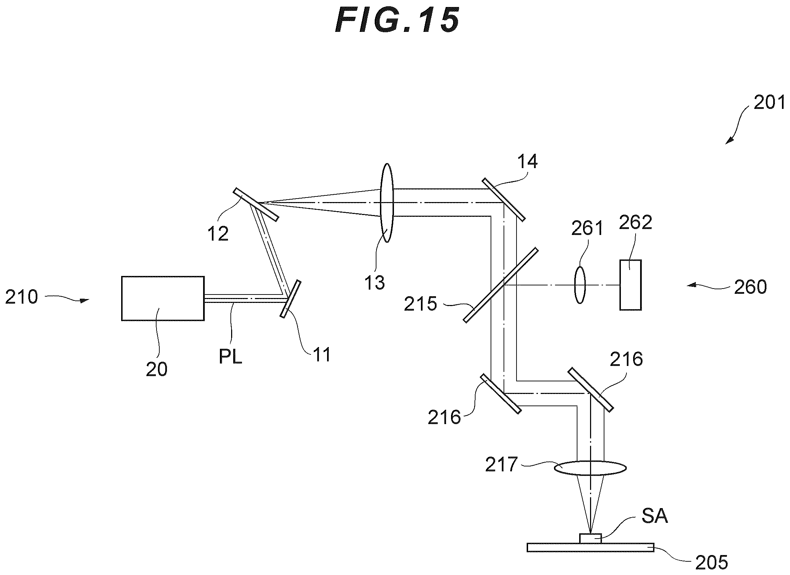

Next, a microscope device according to a second embodiment of the present application is described with reference to FIG. 15. As shown in FIG. 15, the microscope device 201 according to the second embodiment includes a stage 205, an optical device 210, and a detection unit 260. The microscope device 201 is also called a two-photon excitation fluorescence microscope or a multi-photon excitation fluorescence microscope. A sample SA is mounted on an upper surface of the stage 205. The sample SA may be, for example, a cell.

The detection unit 260 includes a collective lens 261, and a detector 262. The detection unit 260 further includes a dichroic mirror 215, galvanometer mirrors 216 and 216, and an objective lens 217 of the optical device 210. The collective lens 261 focuses fluorescence from the sample SA reflected by the dichroic mirror 215. The detector 262 is configured to include a photomultiplier tube (PMT), a photodiode (PD) or the like. The detector 262 detects fluorescence from the sample SA focused by the collective lens 261, and outputs a detection signal. Based on the detection signal detected by the detector 262, image processing is performed by an image processor, not shown, and an image of the sample SA obtained by image processing by the image processor is displayed on a display device, not shown.

Next, the optical device 210 according to the second embodiment is described. The optical device 210 focuses pulsed light that is excitation light, on the sample SA. The pulse duration of the pulsed light is a duration on the femtosecond (fs) scale, for example. As shown in FIG. 15, the optical device 210 includes a light source unit 20, a first mirror 11, a diffraction grating 12, a collimating lens 13, a second mirror 14, a dichroic mirror 215, galvanometer mirrors 216 and 216, and an objective lens 217. The light source unit 20, the first mirror 11, the diffraction grating 12, the collimating lens 13, and the second mirror 14 have configurations similar to those of the light source unit 20, the first mirror 11, the diffraction grating 12, the collimating lens 13, and the second mirror 14 according to the first embodiment, are assigned the same symbols as those in the first embodiment, and detailed description thereof is omitted.

The dichroic mirror 215 transmits the pulsed light PL having entered the dichroic mirror 215, toward the galvanometer mirrors 216 and 216. The dichroic mirror 215 reflects fluorescence from the sample SA having entered the dichroic mirror 215 through the objective lens 217 and the galvanometer mirrors 216 and 216, toward the detection unit 260 (collective lens 261).

The galvanometer mirrors 216 and 216 reflect the pulsed light PL having passed through the dichroic mirror 215, toward the objective lens 217. The galvanometer mirrors 216 and 216 reflect fluorescence from the sample SA having passed through the objective lens 217, toward the dichroic mirror 215. The galvanometer mirrors 216 and 216 can change the traveling direction of the pulsed light PL by changing the orientation of the reflective surface. By changing the traveling direction of the pulsed light PL by the galvanometer mirrors 216 and 216, a flat surface (observation surface) on the sample SA that is perpendicular to the optical axis of the objective lens 217 can be scanned. Preferably, the galvanometer mirrors 216 and 216 are provided at the positions of the pupil of the objective lens 217 or positions conjugate with the pupil.

The objective lens 217 focuses the pulsed light PL reflected by the galvanometer mirrors 216 and 216, on the sample SA. Note that the diffraction grating 12, the sample SA (observation surface), and the detector 262 are conjugate with each other.

Next, a scanning method with pulsed light using the optical device 210 of the microscope device 201 configured as described above is described. Since the scanning method according to the second embodiment is similar to the scanning method described in the first embodiment, description is made with reference to the same FIG. 10 in the first embodiment. First, similar to the first embodiment, the pulsed light is generated (step ST1). Next, similar to the first embodiment, the pulsed light is amplified (step ST2).

Next, the pulsed light is dispersed by the diffraction grating 12 (step ST3). In the second embodiment, the light source unit 20 emits, for example, pulsed light PL in a wavelength band of 1 $\mu$m as excitation light. The pulsed light PL emitted from the light source unit 20 is reflected by the first mirror 11, and enters the diffraction grating 12. The diffraction grating 12 disperses the pulsed light PL reflected by the first mirror 11, through the diffraction phenomenon. The pulsed light PL dispersed by the diffraction grating 12 passes through the collimating lens 13 and is collimated, and enters the second mirror 14. In this case, the spatial chirp of the pulsed light PL required for temporal focus is caused by the diffraction grating 12 and the collimating lens 13.

Next, the pulsed light is focused by the objective lens 217 (step ST4). The pulsed light PL reflected by the second mirror 14 passes through the dichroic mirror 215, and is reflected by the galvanometer mirrors 216 and 216. The pulsed light PL reflected by the galvanometer mirrors 216 and 216 enters the objective lens 217. The objective lens 217 focuses the pulsed light PL reflected by the galvanometer mirrors 216 and 216, on the sample SA. Note that the pulse duration of the pulsed light PL focused by the objective lens 217 becomes the pulse duration of the pulsed light PL at entry to the diffraction grating 12 due to occurrence of temporal focus. This also encompasses not only a case where the pulse duration of the pulsed light PL focused by the objective lens 217 becomes (completely) identical to the pulse duration of the pulsed light PL at entry to the diffraction grating 12, but also a case of becoming approximately identical to the pulse duration of the pulsed light PL at entry to the diffraction grating 12.

Scanning is performed while changing the position at which temporal focus occurs in the optical axis direction of the objective lens 217 (step ST5). In this case, by modulating the excitation currents for the first pump LD 27 and the second pump LD 28, the amplification factors of the first optical fiber amplifier 25 and the second optical fiber amplifier 26 are changed. Accordingly, the amount of chirp (GDD) of the pulsed light PL is changed, and scanning in the optical axis direction (z-direction) is performed while changing the position at which temporal focus occurs in the optical axis direction of the objective lens 217. In this case, by changing the traveling direction of the pulsed light PL by the galvanometer mirrors 216 and 216, scanning in the directions (XY directions) perpendicular to the optical axis of the objective lens 217 is performed. Note that in a state where the pulsed light PL from the optical device 210 is continuously emitted to the sample SA, the step of generating the pulsed light (ST1), the step of amplifying the pulsed light (ST2), the step of dispersing the pulsed light (ST3), the step of focusing the pulsed light (ST4), and the step of performing scanning (ST5) described above are performed in parallel.

By irradiation with the pulsed light PL that is excitation light, a fluorescent material contained in the sample SA is subjected to two-photon excitation, and fluorescence having a shorter wavelength than the excitation light (pulsed light PL) is emitted. In this case, by the effect of the temporal focus, the pulse duration of the pulsed light PL is reduced, and the original pulse duration at entry to the diffraction grating 12 is restored on the observation surface of the sample SA (the focal plane of objective lens 217). Since the resolution of the microscope device 201 in the optical axis direction (z-direction) is improved by the effect of temporal focus, two-photon excitation occurs only in a microscopic area adjacent to the focal point of the objective lens 217. Accordingly, by changing the position at which temporal focus occurs (position in the z-direction), scanning in the optical axis direction (z-direction) can be performed, and by combination with scanning in the directions perpendicular to the optical axis by the galvanometer mirrors 216 and 216, a three-dimensional image of the sample SA can be generated.

Note that fluorescence from the sample SA enters the objective lens 217. The fluorescence having passed through the objective lens 217 is reflected by the galvanometer mirrors 216 and 216, and enters the dichroic mirror 215. The fluorescence having entered the dichroic mirror 215 is reflected by the dichroic mirror 215, and enters the collective lens 261. The fluorescence having passed through the collective lens 261 is focused on the detector 262. Note that the diffraction grating 12, the sample SA (observation surface), and the detector 262 are conjugate with each other. Accordingly, by the configuration of allowing the pulsed light PL as the excitation light to be focused on the observation surface of the sample SA by the objective lens 217, fluorescence having passed through the objective lens 217 in fluorescence generated by two-photon excitation is exhaustively allowed to reach the detector 262.

According to the second embodiment, the optical device 210 of the microscope device 201 includes the first optical fiber amplifier 25 and the second optical fiber amplifier 26 that amplify pulsed light, the diffraction grating 12 that disperses the pulsed light, and the objective lens 217 that focuses the pulsed light dispersed by the diffraction grating 12, and can change the amplification factors of the first optical fiber amplifier 25 and the second optical fiber amplifier 26. Note that the pulse duration of the pulsed light focused by the objective lens 217 becomes the pulse duration of the pulsed light at entry to the diffraction grating 12 due to occurrence of temporal focus. Since similar to the first embodiment described above, the amplification factor of the first optical fiber amplifier 25 can be changed at high speed by modulating the excitation current for the first pump LD 27 at high speed, the amount of chirp (GDD) of the pulsed light can be changed at high speed, and the position at which temporal focus occurs (position in the z-direction) can be changed at high speed. Since the resolution of the microscope device 201 in the optical axis direction (z-direction) is improved by the effect of temporal focus even with the focus radius of the pulsed light approximately ranging from 5 to 10 $\mu$m, scanning in the optical axis direction (z-direction) can be performed at high speed by changing the position at which temporal focus occurs (position in the z-direction) at high speed. Accordingly, by combination with scanning in the directions perpendicular to the optical axis by the galvanometer mirrors 216 and 216, a three-dimensional image of the sample SA can be generated at high speed.

Similar to the first embodiment, the output of the pulsed light output from the second optical fiber amplifier 26 may be maintained within a constant range by adjusting the amplification factor of the second optical fiber amplifier 26 through controlling the excitation current for the second pump LD 28. Alternatively, the pulse energy of the pulsed light may be controlled by installing a light intensity adjuster, such as an acousto-optical element (AOM), on an input side or an output side of the second optical fiber amplifier 26. This can reduce the variation in the pulse energy of the pulsed light while changing the amount of chirp (GDD) of the pulsed light.

Similar to the first embodiment, the compressor 31 that compresses the pulse duration of the pulsed light output from the second optical fiber amplifier 26 may be provided. Accordingly, the pulsed light with a Fourier transform limited pulse can be obtained.

Similar to the first embodiment, in the second embodiment described above, the oscillator 22 is not necessarily provided, and the first optical fiber amplifier 25 may amplify pulsed light from a pulsed light generator provided outside the microscope device 201. In this case, the step of generating the pulsed light (ST1) described above may be omitted.

Similar to the first embodiment, in the second embodiment described above, instead of the diffraction grating 12, a prism or the like may be provided as the dispersive element that disperses the pulsed light.

Similar to the first embodiment, in the second embodiment described above, by controlling the light intensity of the input pulsed light by the acousto-optical element (AOM) or the like provided on the input side of the first optical fiber amplifier 25, the amplification factor of the first optical fiber amplifier 25 may be effectively changed, and the amount of chirp (GDD) of the pulsed light may be changed. By controlling the light intensity of the input pulsed light by the acousto-optical element (AOM) or the like provided on the input side or the output side of the second optical fiber amplifier 26, the amplification factor of the second optical fiber amplifier 26 may be effectively changed, and the output of the second optical fiber amplifier 26 may be maintained within a constant range.

Similar to the first embodiment, in the second embodiment described above, the light source unit 20 does not necessarily include the amplifiers with the two-stage configuration (the first optical fiber amplifier 25 and the second optical fiber amplifier 26), and may include only one amplifier instead.

Similar to the first embodiment, in the second embodiment described above, the compressor 31 does not necessarily include the diffraction grating pair (grating pair), and may be configured to include a prism pair instead.

While similar to the first embodiment, in the second embodiment described above, the compressor 31 is provided in the light source unit 20, there is no limitation to this, and the compressor is not necessarily provided in the light source unit. For example, the optical device of the microscope device 201 may be configured similarly to the optical device 110 according to the modified example of the first embodiment.

While the description has been made with exemplary illustration of the two-photon excitation fluorescence microscope (multi-photon excitation fluorescence microscope) as an example of the microscope device 201 in the second embodiment described above, there is no limitation to this, and for example, it may be a second harmonic generation (SHG) microscope or a third harmonic generation (THG) microscope.

EXPLANATION OF NUMERALS AND CHARACTERS

| | | | | |
|---|---|---|---|---|
| 1 | Optical machining device (first embodiment) | | | |
| 10 | Optical device | | | |
| 12 | Diffraction grating | 13 | Collimating lens | |
| 17 | Objective lens | | | |
| 20 | Light source unit | | | |
| 22 | Oscillator (pulsed light generator) | | | |
| 25 | First optical fiber amplifier | 26 | Second optical fiber amplifier | |
| 27 | First pump LD | 28 | Second pump LD | |
| 31 | Compressor | | | |
| 110 | Optical device (modified example) | | | |
| 111 | First diffraction grating | 112 | Second diffraction grating | |
| 117 | Objective lens | | | |
| 120 | Light source unit | | | |
| 122 | Oscillator (pulsed light generator) | | | |
| 125 | Optical fiber amplifier | | | |
| 127 | Pump LD | | | |
| 201 | Microscope device (second embodiment) | | | |
| 210 | Optical device | 217 | Objective lens | |
| PL | Pulsed light | | | |

**Claims**

1. An optical device, comprising:

   an amplifier that amplifies pulsed light;
   a dispersive element that disperses the pulsed light output from the amplifier; and
   an objective lens that focuses the pulsed light dispersed by the dispersive element,
   wherein an amplification factor of the amplifier can be changed.

2. The optical device according to claim 1, further comprising

   a collimating lens that collimates the pulsed light dispersed by the dispersive element,
   wherein the objective lens focuses the pulsed light having passed through the collimating lens, and
   a pulse duration of the pulsed light focused by the objective lens becomes a pulse duration of the pulsed light at
   entry to the dispersive element, due to occurrence of temporal focus.

3. The optical device according to claim 1 or 2, further comprising

   a second amplifier that amplifies the pulsed light output from the amplifier,
   wherein the dispersive element disperses the pulsed light output from the second amplifier, and
   an amplification factor of the second amplifier can be changed.

4. The optical device according to claim 3,

   wherein a position at which temporal focus occurs is changed in an optical axis direction of the objective lens by
   changing the amplification factor of the amplifier, and
   an output of the pulsed light output from the second amplifier is maintained within a constant range by changing
   the amplification factor of the second amplifier.

5. The optical device according to claim 3 or 4, further comprising a compressor that compresses a pulse duration of the
   pulsed light output from the second amplifier.

6. An optical machining device, comprising an optical device that scans a workpiece with pulsed light emitted thereto, wherein the optical device is the optical device according to any one of claims 1 to 5.

7. A microscope device, comprising an optical device that scans a sample with pulsed light emitted thereto, wherein the optical device is the optical device according to any one of claims 1 to 5.

8. A scanning method, comprising:

amplifying pulsed light using an amplifier;
dispersing the pulsed light output from the amplifier, using a dispersive element;
focusing the pulsed light dispersed by the dispersive element, using an objective lens; and
performing scanning while changing a position at which temporal focus of the pulsed light focused using the objective lens occurs, in an optical axis direction of the objective lens, by changing an amplification factor of the amplifier.

# FIG.1

EP 4 589 357 A1

## FIG.2

# FIG.3

# FIG.4

# FIG.5

# FIG.6

# FIG.7

31

y ⊗ → z

x

(29)

32    33    34    35

# FIG.8

31

32    33    34    35

x  z

y

# FIG.9

# FIG.10

```
        ┌──────────────┐
        │    START     │
        └──────┬───────┘
               │
               ▼
     ┌──────────────────┐
     │    GENERATE      │─── ST1
     │  PULSED LIGHT    │
     └────────┬─────────┘
              │
              ▼
     ┌──────────────────┐
     │     AMPLIFY      │─── ST2
     │  PULSED LIGHT    │
     └────────┬─────────┘
              │
              ▼
     ┌──────────────────┐
     │    DISPERSE      │─── ST3
     │  PULSED LIGHT    │
     └────────┬─────────┘
              │
              ▼
     ┌──────────────────┐
     │     FOCUS        │─── ST4
     │  PULSED LIGHT    │
     └────────┬─────────┘
              │
              ▼
     ┌──────────────────┐
     │      SCAN        │─── ST5
     └────────┬─────────┘
              │
              ▼
        ┌──────────────┐
        │     END      │
        └──────────────┘
```

# FIG.11

EP 4 589 357 A1

# *FIG.12*

EP 4 589 357 A1

# FIG.13

# FIG.14

FIG.15

## INTERNATIONAL SEARCH REPORT

| International application No. |
| --- |
| **PCT/JP2023/033478** |

| A. | CLASSIFICATION OF SUBJECT MATTER |
| --- | --- |

*G02B 21/06*(2006.01)i; *B23K 26/082*(2014.01)i; *G02B 26/10*(2006.01)i; *G02F 1/365*(2006.01)i; *H01S 3/067*(2006.01)i; *H01S 3/10*(2006.01)i

FI:   G02B21/06; B23K26/082; G02B26/10 104Z; G02F1/365; H01S3/067; H01S3/10 D

According to International Patent Classification (IPC) or to both national classification and IPC

| B. | FIELDS SEARCHED |
| --- | --- |

Minimum documentation searched (classification system followed by classification symbols)

G02B21/06; B23K26/082; G02B26/10; G02F1/365; H01S3/067; H01S3/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2017-056489 A (RICOH COMPANY, LIMITED) 23 March 2017 (2017-03-23) paragraphs [0011]-[0012], [0068], [0081], fig. 2, 12, etc. | 1, 3, 5-7 |
| A | | 2, 4, 8 |
| A | WO 2019/217846 A1 (BOARD OF REGENTS, THE UNIVERSITY OF TEXAS SYSTEM) 14 November 2019 (2019-11-14) entire text, all drawings | 1-8 |
| A | WO 2012/135823 A1 (MASSACHUSETTS INSTITUTE OF TECHNOLOGY) 04 October 2012 (2012-10-04) entire text, all drawings | 1-8 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 November 2023** | **14 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/033478**

| Patent document cited in search report | | | Publication date (day/month/year) | Patent family member(s) | | | Publication date (day/month/year) |
|---|---|---|---|---|---|---|---|
| JP | 2017-056489 | A | 23 March 2017 | CN | 106475681 | A | |
| | | | | KR | 10-2017-0026289 | A | |
| | | | | TW | 201707825 | A | |
| WO | 2019/217846 | A1 | 14 November 2019 | US entire text, all drawings | 2021/0161385 | A1 | |
| WO | 2012/135823 | A1 | 04 October 2012 | US entire text, all drawings | 2014/0128743 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DURST E. et al.** Simultaneous spatial and temporal focus for axial scanning. *Optics Express*, 2006, vol. 14, 12243